(19) Europäisches Patentamt / European Patent Office / Office européen des brevets

(11) **EP 3 868 922 A1**

(12) **EUROPEAN PATENT APPLICATION**
published in accordance with Art. 153(4) EPC

(43) Date of publication:
**25.08.2021 Bulletin 2021/34**

(21) Application number: **19872635.8**

(22) Date of filing: **16.10.2019**

(51) Int Cl.:
*C25D 5/12* (2006.01)  *C25D 5/50* (2006.01)
*C25D 7/00* (2006.01)  *H01R 13/03* (2006.01)

(86) International application number:
**PCT/JP2019/040694**

(87) International publication number:
**WO 2020/080411 (23.04.2020 Gazette 2020/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.10.2018 JP 2018195558**

(71) Applicant: **KABUSHIKI KAISHA KOBE SEIKO SHO (KOBE STEEL, LTD.)**
**Hyogo 651-8585 (JP)**

(72) Inventors:
• **UEDA, Yutaro**
  **Yamaguchi 752-0953 (JP)**
• **TSURU, Masahiro**
  **Yamaguchi 752-0953 (JP)**
• **SAKAMOTO, Hiroshi**
  **Yamaguchi 752-0953 (JP)**

(74) Representative: **Müller-Boré & Partner**
**Patentanwälte PartG mbB**
**Friedenheimer Brücke 21**
**80639 München (DE)**

(54) **COPPER OR COPPER ALLOY STRIP WITH SURFACE COATING LAYER**

(57) A copper or copper alloy sheet strip with a surface coating layer according to an embodiment of the present invention includes: a copper or copper alloy sheet strip as a base metal; and an underlayer and a Cu-Sn alloy layer provided as the surface coating layer on a surface of the base metal in this order, the underlayer including any one or two layers of a Ni layer, a Co layer, and a Fe layer, wherein a surface of the Cu-Sn alloy layer has an arithmetic mean roughness Ra of 0.3 to 3.4 $\mu$m, and a maximum height Rz of 2.2 to 14.4 $\mu$m.

FIG. 1

**Description**

Technical Field

The present disclosure relates to a copper or copper alloy sheet strip with a surface coating layer, which is used as a conductive material for connecting parts, such as terminals used mainly in the automotive field and the general consumer equipment field, and which can produce connecting parts with both low insertion force and resistance to micro-sliding wear.

Background Art

Mating connection terminals, constituted of a combination of male and female terminals, are used in connectors for connecting wires in automobiles and the like. In the field of automotive electrical equipment, connectors have been becoming multipolar due to the increasing use and sophistication of electronic control, and the insertion force of connectors in an assembly process of automobiles has been increasing, which has posed a problem of increased physical burden on workers. Thus, such a connector has been required to reduce its insertion force.

In addition, the contact pressure of the terminals has been becoming smaller along with the progress of miniaturization of the terminals. As a result, there may occur a phenomenon in which micro-sliding of contacts between connection terminals occurs due to vibration of an engine of a vehicle or vibration generated by driving the vehicle, causing contact parts to wear out, and increasing the contact resistance (i.e., micro-sliding wear phenomenon), which has been a problem. The micro-sliding wear phenomenon is considered to be caused by oxidized Sn wear powder interposed between the contacts.

Various proposals have been made to reduce the insertion force of connectors and to ameliorate the micro-sliding wear phenomenon in a conductive material for connecting parts, which has a surface coating layer on the surface of a base metal constituted of a copper or copper alloy sheet strip.

A conductive material mentioned in Patent Document 1 has a Ni layer, a Cu-Sn alloy layer, and a Sn layer as the surface coating layer in this order. The Cu-Sn alloy layer has a Cu content of 20 to 70 at% and an average thickness of 0.2 to 3.0 $\mu$m, and the Sn layer has an average thickness of 0.2 to 5.0 $\mu$m. The surface of the conductive material is subjected to a reflow process, and part of the Cu-Sn alloy layer is exposed on the outermost surface, with its exposed area ratio of 3 to 75%. The surface of the conductive material has an arithmetic mean roughness Ra of 0.15 $\mu$m or more in at least one direction, and an arithmetic mean roughness Ra of 3.0 $\mu$m or less in all directions.

A conductive material mentioned in Patent Document 2 has an underlayer composed of any one or two of Ni, Co, and Fe layers as the surface coating layer, a Cu-Sn alloy layer, and a Sn layer in this order. The underlayer has an average thickness of 0.1 to 3.0 $\mu$m. The Cu-Sn alloy layer is composed of an $\eta$ phase or both of an $\eta$ phase and an $\varepsilon$ phase, with an average thickness of 0.2 to 3.0 $\mu$m. Regarding the surface roughness of the Cu-Sn alloy layer, the arithmetic mean height Sa thereof is 0.2 $\mu$m or less, and the maximum height Sz thereof is 5.0 $\mu$m or less. The Sn layer has an average thickness of 0.02 to 0.2 $\mu$m and covers the whole surface of the Cu-Sn alloy layer.

A conductive material mentioned in Patent Document 3 has an underlayer made of Ni or a Cu-Ni alloy and a Cu-Ni-Sn alloy layer which are provided as a surface coating layer in this order. The surface of this conductive material has an arithmetic mean roughness Ra of 0.15 $\mu$m or less, and a maximum height Rz of 0.8 $\mu$m or less.

A conductive material mentioned in Patent Document 4 has a Cu-Sn plating layer in which Sn is mixed in a Cu-Sn alloy, as the surface coating layer. This conductive material has a Ni layer under the Cu-Sn plating layer, and a Sn layer above the Cu-Sn plating layer, as appropriate.

A conductive material mentioned in Patent Document 5 has an underlayer made of Ni or a Cu-Ni alloy, a Cu-Sn alloy layer, and Sn layers in this order, as the surface coating layer. The Sn layers exist within recesses between crystal grains of the Cu-Sn alloy layer, and cover 20 to 80% of the area of the Cu-Sn alloy layer in terms of area ratio. The Cu-Sn alloy layer has an average thickness of 0.4 to 1.5 $\mu$m. The Sn layer has an average thickness of 0.05 to 0.4 $\mu$m and the maximum thickness of 0.05 to 1.0 $\mu$m. Regarding the surface roughness of this conductive material, the arithmetic mean roughness Ra thereof is in the range of 0.05 to 0.2 $\mu$m and the maximum height Ry thereof is in the range of 0.3 to 1.5 $\mu$m.

A conductive material mentioned in Patent Document 6 has an underlayer composed of any one or two of Ni, Co, and Fe layers as the surface coating layer, a Cu-Sn alloy layer, and a Sn layer in this order. In this conductive material, the Cu content, the surface exposure rate, and the surface roughness of the Cu-Sn alloy layer are the same as those in the conductive material mentioned in Patent Document 1, and the average grain size on the surface of the Cu-Sn alloy layer is 2 $\mu$m or less.

Prior Art Document

Patent Document

Patent Document 1: JP 2006-183068 A
Patent Document 2: JP 2017-82307 A
Patent Document 3: JP 2017-43827 A
Patent Document 4: JP 2016-211031 A
Patent Document 5: JP 2015-180770 A
Patent Document 6: JP 2014-208904 A

Disclosure of the Invention

Problems to be Solved by the Invention

The conductive materials for connecting parts mentioned in Patent Documents 1 to 6 are said to be capable of reducing the insertion force of connectors and ameliorating the micro-sliding wear phenomenon. Meanwhile, the contact pressure is being lowered along with the promotion of multipolarity and miniaturization of connectors, which again poses a problem of deterioration of the resistance to micro-sliding wear.

An object of embodiments of the present disclosure is to provide a conductive material (i.e., a copper or copper alloy sheet strip with a surface coating layer) which has a low coefficient of friction (i.e., with a low insertion force) and can produce connecting parts, such as connectors, with excellent resistance to micro-sliding wear even under low contact pressure.

Means for Solving the Problems

When the conductive material for the connecting parts has a low coefficient of friction and the contact pressure of the terminal is small, the contact of the terminal tends to slide easily, while the Sn wear powder generated by the sliding is not easily discharged to the outside of the contact, causing the oxidized Sn wear powder to accumulate between the contacts and generally causing micro-sliding wear (i.e., an increase in the contact resistance) easily. When the surface coverage ratio of the Sn layers on the outermost surface of the conductive material is large, the coefficient of friction of the conductive material increases, and the amount of Sn wear powder accumulating between the contacts also increases, thus worsening the resistance to micro-sliding wear.

In the embodiments of the present invention, by decreasing the surface coverage ratio of the Sn layers and increasing the surface roughness of the Cu-Sn alloy layer in the conductive material for connecting parts, the discharge of generated Sn wear powder to the outside of the contact is promoted while suppressing an increase in the amount of Sn wear powder between the contacts, and the resistance to micro-sliding wear can be ameliorated even under a low contact pressure. Further, by decreasing the surface coverage ratio of the Sn layers, a low coefficient of friction can be achieved.

A conductive material for a connecting part (a copper or copper alloy sheet strip with a surface coating layer) according to an embodiment of the present invention includes: a copper or copper alloy sheet strip as a base metal; and an underlayer and a Cu-Sn alloy layer provided as the surface coating layer on a surface of the base metal in this order, the underlayer including any one or two layers of a Ni layer, a Co layer, and a Fe layer, in which a surface of the Cu-Sn alloy layer has an arithmetic mean roughness Ra of 0.3 to 3.4 $\mu$m, and a maximum height Rz of 2.2 to 14.4 $\mu$m. The copper or copper alloy sheet strip with a surface coating layer may further include a Sn layer formed as a part of the surface coating layer on the surface of the Cu-Sn alloy layer. In such a case, a surface coverage ratio of the Sn layer is 10% or less.

The term "sheet strip" as used in the embodiments of the present invention means a sheet or strip (i.e., coil). The Ni layer, Co layer, Fe layer, and Sn layer in the embodiments of the present invention include Ni metal, Co metal, Fe metal, and Sn metal, as well as a Ni alloy, a Co alloy, a Fe alloy, and a Sn alloy, respectively.

Effects of the Invention

By using the copper or copper alloy sheet strip with the surface coating layer according to the embodiments of the present invention as the material, it is possible to obtain a connecting part, such as a connector, with a low insertion force and excellent resistance to micro-sliding wear even under low contact pressure.

Brief Description of the Drawings

FIG. 1 is a schematic sectional view of a copper or copper alloy sheet strip with a surface coating layer according to an embodiment of the present invention.
FIG. 2 is a photomicrograph of the miscrostructure of the copper or copper alloy sheet strip with the surface coating layer according to the embodiment of the present invention.
FIG. 3 is a schematic diagram of a micro-sliding wear tester.
FIG. 4 is a schematic diagram of a friction coefficient meter.

Mode for Carrying Out the Invention

A copper or copper alloy sheet strip with a surface coating layer according to an embodiment of the present invention will be described in more detail below.

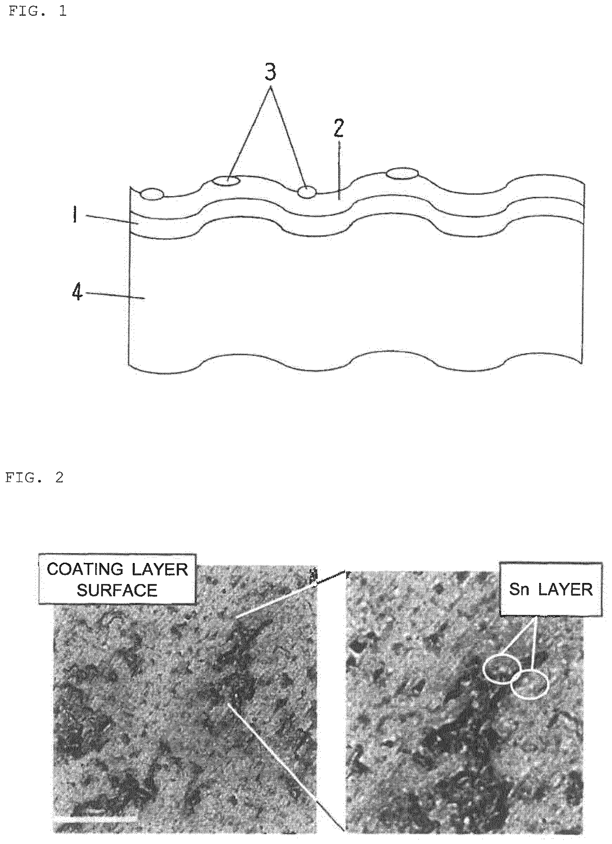

FIG. 1 (a schematic sectional view) illustrates an example of the copper or copper alloy sheet strip with the surface coating layer according to the embodiment of the present invention. In FIG. 1, the surface coating layer includes an underlayer 1, a Cu-Sn alloy layer 2, and Sn layers 3, which are formed on a base metal (a copper or copper alloy sheet strip) 4 in this order. The area of each individual Sn layer 3 is very small. The Sn layers 3 are scattered over the surface of the Cu-Sn alloy layer 2.

<Cu-Sn Alloy Layer>

(Surface roughness of Cu-Sn alloy layer)

When sliding occurs between contacts upon mating of terminals (i.e., upon insertion of a male terminal), or when micro-sliding occurs between the contacts due to engine vibration or vibration generated during vehicle driving, the Sn layer on a terminal surface is worn away, and thereby oxidized Sn wear powder accumulates between the contacts, causing micro-sliding wear (i.e., an increase in the contact resistance). However, when there are sufficiently large bumps and recesses on the surface of the Cu-Sn alloy layer in at least one of the male and female terminals, the discharge of Sn wear powder to the outside of the contact is promoted, thereby suppressing the accumulation of Sn wear powder, resulting in improved micro-sliding wear characteristics.

If the arithmetic mean roughness Ra of the surface of the Cu-Sn alloy layer is less than 0.3 $\mu$m, or the maximum height Rz is less than 2.2 $\mu$m, the discharge of Sn wear powder to the outside of the contact becomes insufficient. On the other hand, if the arithmetic mean roughness Ra of the surface of the Cu-Sn alloy layer exceeds 3.4 $\mu$m, or the maximum height Rz exceeds 14.4 $\mu$m, there is a risk of premature wear of the contact and exposure of the base metal to form a copper oxide, increasing the contact resistance. Furthermore, there is also a risk that the material may wear in a current roughening process (i.e., a process of transferring bumps and recesses on a roll surface to the surface of a copper alloy sheet strip) and generate copper powder, which will contaminate a product (copper alloy sheet strip). Therefore, regarding the surface roughness of the Cu-Sn alloy layer, the arithmetic mean roughness Ra thereof is in the range of 0.3 to 3.4 $\mu$m, and the maximum height Rz thereof is in the range of 2.2 to 14.4 $\mu$m. In order to control the surface roughnesses of the Cu-Sn alloy layer in the ranges mentioned above, it is necessary to uniformly grow the Cu-Sn alloy layer by a reflow process to be mentioned later with the arithmetic mean roughness Ra of the surface of the base metal set in the range of 0.3 to 3.4 $\mu$m, and the maximum height Rz thereof set in the range of 2.2 to 14.4 $\mu$m. The arithmetic mean roughness Ra and the maximum height Rz are the line roughnesses specified in JIS B0601 (2001). The lower limit of the arithmetic mean roughness Ra of the surface of the Cu-Sn alloy layer is preferably 0.5 $\mu$m, and the upper limit thereof is preferably 2.0 $\mu$m. The lower limit of the maximum height Rz of the surface of the Cu-Sn alloy layer is preferably 3.5 $\mu$m, and the upper limit thereof is preferably 10.0 $\mu$m.

If the average length of elements (i.e., an average interval between the bump and recess) Rsm on the surface of the Cu-Sn alloy layer is extremely small, the manufacturing cost of rolls used in the roughening process may increase. On the other hand, if the average length of the elements Rsm is extremely large, especially when the copper or copper alloy sheet strip with the surface coating layer is used in a small terminal with a small contact area, the bump has less opportunity to contact the other terminal, which may make it difficult to obtain a low coefficient of friction. In consideration of the above points, the average length Rsm of the elements on the surface of the Cu-Sn alloy layer is preferably set in the range of 24 to 218 $\mu$m.

It is noted that the direction of measurement of the surface roughnesses (Ra, Rz, Rsm) of the Cu-Sn alloy layer is defined as the direction in which the arithmetic mean roughness Ra and the maximum height Rz become the largest (for example, in the direction perpendicular to the rolling or polishing direction of the base metal).

(Average thickness of Cu-Sn alloy layer)

As mentioned in Patent Document 2, the Cu-Sn alloy layer has the functions of increasing frictional force between the male and female terminals when the connectors are joined, and suppressing the influence of vibrations on the connectors (i.e., the sliding that occurs between the contacts). Suppressing the sliding between the contacts achieves the effect of maintaining a low value of contact resistance. However, if the average thickness of the Cu-Sn alloy layer is small, the effect of suppressing the sliding between the contacts becomes small, especially under a low contact pressure. The Cu-Sn alloy layer prevents the diffusion of Ni, Co, and Fe, which are components of the underlayer, into the Sn layer. If the average thickness of the Cu-Sn alloy layer is small, the anti-diffusion effect thereof is insufficient, and Ni, Co, and Fe diffuse into the Sn layer to form oxides. The Ni, Co, and Fe oxides have a higher volume resistivity than the Sn oxide, thus increasing the contact resistance. On the other hand, as the average thickness of the Cu-Sn alloy layer increases, the formability of the sheet strip for the terminal may deteriorate, for example, cracking occurs during a bending process. In consideration of the above points, the average thickness of the Cu-Sn alloy layer is preferably set in the range of 0.2 to 1.0 $\mu$m. The lower limit of the average thickness of the Cu-Sn alloy layer is more preferably 0.3 $\mu$m, and the upper limit thereof is more preferably 0.5 $\mu$m.

The Cu-Sn alloy layer is basically composed of Cu and Sn, but Cu in the Cu-Sn alloy layer may be partially substituted with another element or other elements of the underlayer (i.e., one or two of Ni, Co, and Fe).

(Phase structure of Cu-Sn alloy layer)

As mentioned in Patent Document 2, a Cu-Sn alloy layer composed of only an $\eta$ phase ($CU_6Sn_5$) or both an $\varepsilon$ phase ($Cu_3Sn$) and an $\eta$ phase. When the Cu-Sn alloy layer composed of the $\varepsilon$ and $\eta$ phases, the $\varepsilon$ phase is formed between the underlayer and the $\eta$ phase and is in contact with the underlayer. The Cu-Sn alloy layer is a layer formed through the reaction between Cu in a Cu plating layer and Sn in a Sn plating layer by a reflow process. When the relationship between the thickness (ts) of the Sn plating layer and the thickness (tc) of the Cu plating layer before the reflow process is set to ts/tc > 2, only the $\eta$ phase is formed in the equilibrium state, but the $\varepsilon$ phase, which is a non-equilibrium phase in practice, is also formed depending on the reflow process conditions. Since the $\varepsilon$ phase is harder than the $\eta$ phase, the presence of the $\varepsilon$ phase makes the coating layer harder and contributes to the reduction of the friction coefficient.

<Sn Layer>

As part of the surface coating layer, the Sn layers may be formed on the surface of the Cu-Sn alloy layer.

However, to improve the resistance to micro-sliding wear and to achieve a low coefficient of friction (i.e., low insertion force), the surface coverage ratio of the Sn layers is set to 10% or less. The surface coverage ratio of the Sn layers is preferably 5% or less, and may be 0% (i.e., no Sn layer is present).

It is noted that the Sn layer can be essentially made of metallic Sn or a Sn alloy. When the Sn layer is made of a Sn alloy, examples of constituent elements other than Sn in the Sn alloy include Pb, Bi, Zn, Ag, Cu, and the like. Preferably, the Pb content is less than 50% by mass, and the content of other elements is less than 10% by mass.

<Underlayer>

The underlayer composed of any one or two layers of a Ni layer, a Co layer, and a Fe layer is formed between the base metal and the Cu-Sn alloy layer in the case where the Cu layer mentioned below is not present, or between the base metal and the Cu layer in the case where the Cu layer mentioned below is present. As mentioned in Patent Document 2, the underlayer suppresses the diffusion of Cu and alloy elements from the copper alloy base metal into the material surface, and also suppresses an increase in the contact resistance even after its use for a long time at high temperature. The diffusion of the underlayer itself into the material surface is suppressed by the Cu-Sn alloy layer and/or the Cu layer. Because of this, a conductive material in which the underlayer composed of any one or two layers of the Ni layer, the Co layer, and the Fe layer is formed is especially suitable for connecting parts that require heat resistance. The formation of this underlayer also improves the corrosion resistance to sulfurous acid gas of the material.

The thicker the underlayer is, the more the formability deteriorates and the worse the economic efficiency becomes. In contrast, as the underlayer is too thin, for example, pit defects in the underlayer will increase, and thus the above-mentioned effects cannot be fully demonstrated. In consideration of the above points, the average thickness of the underlayer is preferably set in the range of 0.1 to 3.0 $\mu$m.

The Ni layer is made of metallic Ni or a Ni alloy, the Co layer is made of metallic Co or a Co alloy, and the Fe layers is made of metallic Fe or a Fe alloy. Each layer may contain a small amount of any component element or the like that is contained in the base metal. When the Ni layer is made of a Ni alloy, examples of constituent elements other than Ni in the Ni alloy include Cu, P, Co, and the like. The Cu content is 40% by mass or less, while each of the P content and the Co content is desirably 10% by mass or less. When the Co layer is made of a Co alloy, examples of constituent alloy elements other than Co in the Co alloy layer include Ni, Cu, P and the like. The total content of these alloy constituent elements is preferably 10% by mass or less. When the Fe layer is made of a Fe alloy, examples of constituent alloy elements other than Fe include Ni, Cr, C and the like. The total content of these alloy constituent elements is preferably 10% by mass or less.

The underlayer can be a combination of any two layers from among a Ni layer, a Co layer, and a Fe layer, (i.e., a combination of a Co layer and a Ni layer, a combination of a Fe layer and a Ni layer, or a combination of Co layer and a Fe layer). In this case, the average total thickness of these two layers is preferably in the range of 0.1 to 3.0 $\mu$m.

<Cu Layer>

As part of the surface coating layer, the Cu layer may be formed on the underlayer and the Cu-Sn alloy layer. The Cu layer is the residual Cu plating layer that remains without disappearing after the reflow process. As mentioned in Patent Document 2, if the Cu layer becomes too thick, its formability and other properties deteriorate, and its economic efficiency also becomes worse. For this reason, the average thickness of the Cu layer is preferably 3.0 $\mu$m or less, more preferably 1.0 $\mu$m or less, even more preferably 0.3 $\mu$m or less, and most preferably 0 $\mu$m (i.e., the Cu plating layer disappears in the reflow process). When the Cu layer is made of a Cu alloy, examples of constituent elements other than Cu in the Cu alloy include Sn, Zn, and the like. When a constituent element other than Cu is Sn, the Sn content is less than 10% by mass. The content of another element or other elements except for Sn is preferably less than 5% by mass.

<Copper or Copper Alloy Base Metal>

Various copper alloys in addition to pure copper can also be used as the material for the copper or copper alloy sheet strip (i.e., a copper or copper alloy base metal) according to the embodiments of the present invention. Examples of the copper alloys include Cu-Ni-Si based, Cu-Ni-Sn-P based, Cu-Fe-P based, Cu-Zn based, Cu-Cr-Ti-Si based alloys, and the like.

To adjust the surface roughness of the Cu-Sn alloy layer within the range mentioned above, the surface roughness of the copper alloy base metal is preferably in the range of 0.3 to 3.4 $\mu$m in the arithmetic mean roughness Ra and in the range of 2.2 to 14.4 $\mu$m in the maximum height Rz. The direction of measurement of the surface roughnesses (Ra, Rz, Rsm) of the copper or copper alloy base metal is basically the same as the direction in which the surface roughness of the Cu-Sn alloy layer is measured.

Methods of roughening the surface of the copper or copper alloy base metal in this way include mechanical methods such as rolling (i.e., finish rolling using a work crawler that has been roughened by polishing, shot blasting, etc.), polishing, or shot blasting, as mentioned, for example, in Patent Document 1. Physical methods, such as ion etching, or chemical methods, such as etching and electropolishing, can also be used. When the surface of the copper alloy base metal is mechanically polished, a processing altered layer is formed relatively thickly, but the presence of such a processing altered layer does not particularly affect the effects of the embodiments of the present invention.

<Manufacturing Method>

The copper or copper alloy sheet strip with the surface coating layer according to the embodiments of the present invention can be manufactured by roughening the surface of the copper or copper alloy base metal, and then performing base plating (i.e., any one or two of Ni plating, Co plating, and Fe plating), Cu plating, and Sn plating on the surface of the base metal in this order, followed by the reflow process. The initial thicknesses of the Cu plating layer and the Sn plating layer are preferably set such that the Cu plating layer and the Sn plating layer are completely consumed (i.e., disappear) in the reflow process, or that an amount of residual Sn plating layer after the reflow process is negligible. To form an $\eta$ phase ($Cu_6Sn_5$) as the Cu-Sn alloy layer in the reflow process, the ratio of the initial thickness of the Cu plating layer to that of the Sn plating layer is preferably about 1:2.

The reflow process is preferably performed under the conditions that the temperature range is 300 to 600°C and the temperature is held for 25 to 115 seconds. It is preferable to set the holding time shorter when the holding temperature is high or to set the holding time longer when the holding temperature is low.

In the reflow process, Cu in the Cu plating layer and Sn in the Sn plating layer (i.e., molten Sn) are diffused into each other to form the Cu-Sn alloy layer. During the reflow process, the Cu-Sn alloy layer is formed along bumps and recesses on the surface of the underlayer, while fine recesses are formed between adjacent columnar Cu-Sn alloy crystals, so that the molten Sn flows into the recesses of the bumps and recesses on the surface as well as the fine recesses between the crystals.

In the embodiments of the present invention, the Cu or Sn layer may remain even after the reflow process, depending on the ratio of the initial thickness of the Cu plating layer to that of the Sn plating layer, or the conditions for the reflow process. When the Cu layer remains after the reflow process, the average thickness of the Cu layer is preferably 3.0 μm or less. When the Sn plating layer remains after the reflow process, the Sn layers are mainly formed in the above-mentioned recesses. The residual Sn layer is allowed on the condition that its surface coverage ratio is 10% or less.

FIG. 2 shows photomicrographs (i.e., reflection electron images taken by a scanning electron microscope) of surface miscrostructures of the copper or copper alloy sheet strip with the coating layer where a small amount of Sn layers remain (Example No. 3). The photomicrograph on the right side of FIG. 2 is an enlarged photomicrograph showing a part of a photomicrograph on the left side. In the photomicrograph on the left side of FIG. 2, a dark-colored area indicates the bump of the Cu-Sn alloy layer corresponding to a bump of the base metal, and the light-colored area indicates the recess of the Cu-Sn alloy layer corresponding to a recess of the base metal. The photomicrograph of the microstructure taken at a low magnification (i.e., the photomicrograph on the left side of FIG. 2) does not clearly show the presence of the Sn layer, but white, finely scattered Sn layers can be confirmed across the whole enlarged photomicrograph of the microstructure (i.e., the photomicrograph on the right side of FIG. 2). The scale (i.e., a white area) shown in the lower left corner of the photomicrograph on the left side of FIG. 2 has a total length of 200 μm. The size of the Sn layer (i.e., the diameter of a circumscribed circle of Sn) is preferably 100 μm or less, and more preferably 50 μm or less in the top view.

Examples

Copper alloy sheets (Nos. 1 to 9) with a thickness of 0.25 mm and a roughened surface were fabricated, and their surface roughnesses were measured in the following manner. The results are shown in Table 1.

(Surface roughness of base metal)

The surface roughness (i.e., arithmetic mean roughness Ra) of the base metal was measured based on JIS B0601:2001 using a contact-type surface roughness meter (manufactured by TOKYO SEIMITSU CO., LTD.; Surfcom 1400). The measurement conditions for the surface roughness were set as follows: a cutoff value of 0.8 mm; a reference length of 0.8 mm; an evaluation length of 4.0 mm; a measurement speed of 0.3 mm/s; and the tip radius of a stylus of 5 μmR. The measurement direction of the surface roughness was set to the direction perpendicular to the rolling direction (i.e., the direction in which the surface roughness is the largest).

The above-mentioned copper alloy sheets (Nos. 1 to 9) were prepared as the base metals, and then Ni plating, Cu plating, and Sn plating were applied to the surface of each base metal in this order so that these sheets had the Ni, Cu, and Sn plating layers with various thicknesses. A test material was taken from each copper alloy sheet obtained after the plating, and the average thicknesses of the Ni plating layer, Cu plating layer, and Sn plating layer were measured in the following manner. The results are shown in Table 1. The plating solution and plating condition for each of the Ni plating, Cu plating and Sn plating were the same as those mentioned in the examples of Patent Document 2.

(Average thickness of Sn plating layer)

The average thickness of the Sn plating layer of the test material was calculated using a fluorescent X-ray coating thickness gauge (manufactured by Seiko Instruments Inc.; SFT3200). For the measurement conditions, a single-layer calibration curve of Sn/base metal or a two-layer calibration curve of Sn/Ni/base metal was used as the calibration curve, and the collimator diameter was set to φ0.5 mm. The obtained value was defined as the average thickness of the Sn plating layer.

(Average thickness of Cu plating layer)

The thickness of the Cu plating layer was calculated from the current value obtained when the Cu plating was performed. According to Faraday's law, the amount of electro-deposition is proportional to the amount of electricity flowed. The mass m (unit: g) of the deposited Cu was determined by the following equation (1), and thereby the average thickness L (unit: μm) of the Cu plating layer was calculated by the following equation (2).

$$m/M = It/zF \qquad (1)$$

$$L = m/PS \qquad (2)$$

where M is the molecular weight of Cu (unit: g/mol), I is the current value (unit: A), t is the time (unit: s), z is the ionic valence, F is the Faraday constant, P is the density of Cu (g/$\mu$m$^3$), and S is the plating area (unit: $\mu$m$^2$).

(Average thickness of Ni plating layer)

The average thickness of the Ni plating layer of the test material was calculated using the fluorescent X-ray coating thickness gauge (manufactured by Seiko Instruments Inc.; SFT3200). For the measurement conditions, a two-layer calibration curve of Sn/Ni/base metal was used as the calibration curve, and the collimator diameter was set to $\varphi$0.5 mm. It is noted that the average thickness of the Ni plating layer did not change substantially before and after the reflow process.

[Table 1]

| No. | Surface Roughness Ra of Base Metal ($\mu$m) | Average Thickness of Plating ($\mu$m) | | | Reflow Process Conditions (Temperature × Time) |
|---|---|---|---|---|---|
| | | Ni | Cu | Sn | |
| 1 | 0.4 | 0.3 | 0.15 | 0.3 | 450°C × 42 sec |
| 2 | 0.5 | 0.3 | 0.15 | 0.3 | 450°C × 42 sec |
| 3 | 0.7 | 0.3 | 0.15 | 0.3 | 450°C × 42 sec |
| 4 | 2.6 | 0.3 | 0.15 | 0.3 | 450°C × 42 sec |
| 5 | 3.0 | 0.3 | 0.3 | 0.4 | 450°C × 42 sec |
| 6 | 0.1 | 0.3 | 0.15 | 0.3 | 450°C × 42 sec |
| 7 | 0.1 | 0.3 | 0.15 | 0.4 | 450°C × 15 sec |
| 8 | 1.1 | 0.3 | 0.15 | 1.0 | 450°C × 15 sec |
| 9 | 0.1 | - | 0.3 | 1.1 | 450°C × 15 sec |

After subjecting the plated copper alloy sheets to the reflow process under the conditions shown in Table 1, test materials were taken from the reflow-processed copper alloy sheets (Nos. 1 to 9), and then the average thickness of the Cu-Sn alloy layer, the surface roughness of the Cu-Sn alloy layer, and the surface coverage ratio of the Sn layers of each test material were measured in the following manner. The results are shown in Table 2. The Cu plating layers disappeared from all the copper alloy sheets (Nos. 1 to 9) obtained after the reflow process.

(Average thickness of Cu-Sn alloy layer)

First, the test material was immersed in an aqueous solution containing p-nitrophenol and caustic soda as components, for 10 minutes to remove the Sn layer. Then, the thickness of the Sn component contained in the Cu-Sn alloy layer of the test material was measured using the fluorescent X-ray coating thickness gauge (manufactured by Seiko Instruments Inc.; SFT3200). For the measurement conditions, a single-layer calibration curve of Sn/base metal or a two-layer calibration curve of Sn/Ni/base metal was used as the calibration curve, and the collimator diameter was set to $\varphi$0.5 mm. The obtained value was defined as the average thickness of the Cu-Sn alloy layer.

(Surface roughness of Cu-Sn alloy layer)

The surface roughnesses (Ra, Rz, Rsm) of the Cu-Sn alloy layer of each test material were measured using a noncontact surface roughness meter (laser microscope manufactured by OLYMPUS Corporation, model OLS4100) after the removal of the Sn layer. The measurement conditions were set as follows: analysis mode: line roughness, measurement distance: 600 to 800 $\mu$m, and cutoff value As: 2.5 $\mu$m. The measurement direction was set to the direction perpendicular to the rolling direction (i.e., the direction in which the arithmetic mean roughness Ra and the maximum height Rz were the largest). The measured surface roughnesses (Ra, Rz, Rsm) were in conformity with the regulations of JIS B0601:2001.

(Surface coverage ratio of Sn layer)

The surface of each test material was observed with a scanning electron microscope at a magnification of 200X, and the surface coverage ratio of the Sn layers was calculated by actual measurement from its reflected electron image. In the calculation procedure, portions of the reflected electron image which did not correspond to the Sn layers (i.e., the Sn layers corresponding to white portions) were colored in black, and then the area S of the Sn layers was calculated using image analysis software (free software, ImageJ1.49). The surface coverage ratio of the Sn layers was defined as the proportion of the area S in the whole area A of the measured area (100 × S/A) on a percentage basis. The size of a field of view for observation (i.e., the measurement area) was approximately 400 μm × 600 μm. The average value of the surface coverages of the two fields of view was determined for each test material, and the determined average value was used as the surface coverage ratio of the test material.

The micro-sliding wear characteristics and coefficient of kinetic friction were measured for each of the copper alloy sheets (Nos. 1 to 9) obtained after the reflow process as the test materials, in the following manner. The load of 1.0 N applied in the test of micro-sliding wear characteristics was much smaller than 2N in the test of Patent Document 1 and 7N in the test of Patent Document 2. The results are shown in Table 2.

(Micro-sliding wear characteristics)

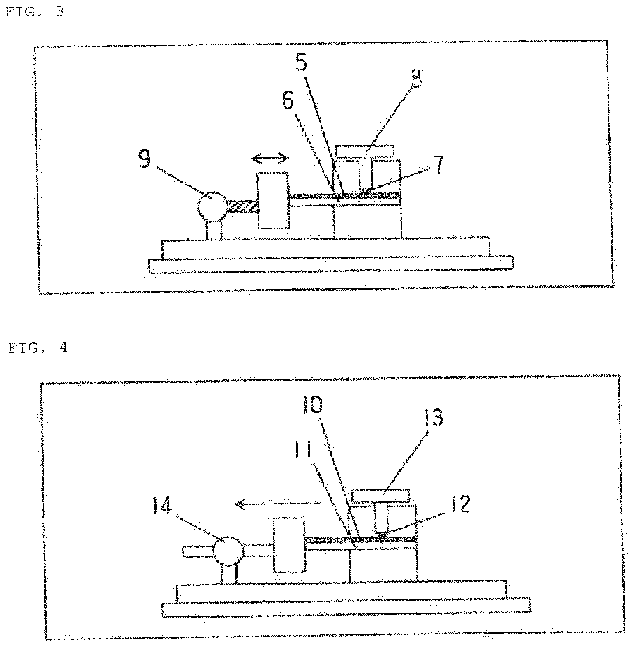

The micro-sliding wear characteristics (i.e., contact resistance values) were measured using a sliding test machine shown in FIG. 3, through simulation of the shape of an indenter of an electrical contact in a mating connecting part. First, a male specimen 5 of a plate cut out of each test material was fixed on a horizontal stand 6, and a female specimen 7 of a hemispherical processed material made of the test material No. 9 was placed on the male specimen 5, followed by bringing the coating layers of these specimens into contact with each other. The outer diameter of the hemispherical processed material was φ1.8 mm. A load of 1.0 N was applied to the female specimen 7 by a weight 8 to press down the male specimen 5. Then, while a constant current of 10 mA was applied between the male and female specimens 5 and 7, the male specimen 5 was slid horizontally using a stepping motor 9 to thereby measure an initial peak value of contact resistance. The sliding distance was set to 50 μm, and the sliding frequency was set to 1 Hz. The arrow in FIG. 4 indicates the sliding direction. The test material in which the initial peak value of the contact resistance was 10 mΩ or less was rated as pass.

(Coefficient of kinetic friction)

The coefficient of kinetic friction of the test material was evaluated using the device shown in FIG. 4, through simulation of the shape of the indenter of the electrical contact in the mating connecting part. First, a male specimen 10 of a plate cut out of each test material was fixed on the horizontal stand 11, and a female specimen 12 of a hemispherical processed material made of the test material No. 9 was placed on the male specimen 10, followed by bringing the coating layers of these specimens into contact with each other. The outer diameter of the hemispherical processed material was set to φ1.8 mm. Subsequently, a load of 1.0 N was applied to the female specimen 12 by a weight 13 to press down the male specimen 10. Then, the maximum friction force (unit: N) was measured when the male specimen 10 was slid once in the horizontal direction using a horizontal load tester (manufactured by AIKOH ENGINEERING CO., LTD.; Model-2152). The sliding distance was set to 5mm, and the sliding velocity was set to 80 mm/min. In FIG. 4, reference number 14 denotes a load cell, the arrow indicates the sliding direction, and the rolling perpendicular direction was oriented parallel to the sliding direction for each of the male and female specimens 10 and 12. When the normal force (i.e., load) is P (= 1.0 N) and the maximum frictional force is F, the coefficient of kinetic friction $\mu'$ is expressed by $\mu' = F/P$. The measurement test was performed three times for each test material to determine an average coefficient of kinetic friction, which was defined as the coefficient of kinetic friction of the test material. The test material in which the coefficient of kinetic friction was less than 0.50 was rated as pass.

[Table 2]

| No. | Average Thickness of Surface Coating Layer (μm) | | Surface roughness of Cu-Sn alloy layer (μm) | | | Surface coverage ratio of Sn layers (%) | **Coefficient** of kinetic friction | Contact resistance value (mΩ) |
|---|---|---|---|---|---|---|---|---|
| | Ni layer | Cu-Sn alloy layer | Ra | Rz | Rsm | | | |
| 1 | 0.3 | 0.3 | 0.3 | 2.2 | 24 | 4 | 0.35 | 8 |
| 2 | 0.3 | 0.3 | 0.5 | 3.9 | 27 | 5 | 0.33 | 7 |

(continued)

| No. | Average Thickness of Surface Coating Layer (μm) | | Surface roughness of Cu-Sn alloy laver (μm) | | | Surface coverage ratio of Sn layers (%) | **Coefficient** of kinetic friction | Contact resistance value (mΩ) |
|---|---|---|---|---|---|---|---|---|
| | Ni layer | Cu-Sn alloy layer | Ra | Rz | Rsm | | | |
| 3 | 0.3 | 0.3 | 0.8 | 4.9 | 58 | 1 | 0.36 | 3 |
| 4 | 0.3 | 0.3 | 2.8 | 14.4 | 218 | 0 | 0.46 | 4 |
| 5 | 0.3 | 0.3 | 3.4 | 14.1 | 184 | 10 | 0.30 | 3 |
| 6 | 0.3 | 0.3 | 0.1* | 1.5* | 13 | 0 | 0.31 | 37* |
| 7 | 0.3 | 0.3 | 0.2* | 1.4* | 12 | 13* | 0.32 | 16* |
| 8 | 0.3 | 0.3 | 0.9 | 5.0 | 66 | 21* | 0.34 | 47* |
| 9 | - | 0.3 | 0.3 | 2.8 | 7 | 100* | 0.56* | 217* |
| *Value that did not satisfy the specification of the embodiment of the present invention or was inferior in its characteristic | | | | | | | | |

As can be seen from Table 2, the test materials No. 1 to 5 with the surface coating layers that satisfied the specifications of the embodiment of the present invention each had a small coefficient of kinetic friction and excellent micro-sliding wear characteristics (that is, a low contact resistance value).

On the other hand, the test materials No. 6 to 9 that did not have the surface coating layer satisfying the specification of the embodiment of the present invention each had a large coefficient of kinetic friction and/or inferior micro-sliding wear characteristics. Among these, the test material No. 6 had inferior micro-slide wear characteristics because both the arithmetic mean roughness Ra and the maximum height Rz of the surface of the Cu-Sn alloy layer were small. The test material No. 7 had inferior micro-slide wear characteristics because both the arithmetic mean roughness Ra and the maximum height Rz of the surface of the Cu-Sn alloy layer were small and the surface coverage ratio of the Sn layers was large. The test material No. 8 had inferior micro-slide wear characteristics because the surface coverage ratio of the Sn layers was extremely large even though both the arithmetic mean roughness Ra and the maximum height Rz of the surface of the Cu-Sn alloy layer were appropriate values. The test material No. 9 had a large coefficient of kinetic friction and inferior micro-slide wear characteristics because the surface coverage ratio of the Sn layers was 100% (that is, there is no exposure of the Cu-Sn alloy layer).

The disclosure of the present specification includes the following aspects.

(Aspect 1)

A copper or copper alloy sheet strip with a surface coating layer, including: a copper or copper alloy sheet strip as a base metal; and an underlayer and a Cu-Sn alloy layer provided as the surface coating layer on a surface of the base metal in this order, the underlayer including any one or two layers of a Ni layer, a Co layer, and a Fe layer, in which a surface of the Cu-Sn alloy layer has an arithmetic mean roughness Ra of 0.3 to 3.4 μm, and a maximum height Rz of 2.2 to 14.4 μm.

(Aspect 2)

The copper or copper alloy sheet strip with the surface coating layer according to Aspect 1, in which a Sn layer is provided on the surface of the Cu-Sn alloy layer, and a surface coverage ratio of the Sn layer is 10% or less.

(Aspect 3)

The copper or copper alloy sheet strip with the surface coating layer according to Aspect 1 or 2, in which the underlayer has an average thickness of 0.1 to 3.0 μm, and the Cu-Sn alloy layer is composed of an η phase or both of an η phase and an ε phase and has an average thickness of 0.2 to 1.0 μm.

(Aspect 4)

The copper or copper alloy sheet strip with the surface coating layer according to any one of Aspects 1 to 3, further including a Cu layer between the underlayer and the Cu-Sn alloy layer.

(Aspect 5)

The copper or copper alloy sheet strip with the surface coating layer according to any one of Aspects 1 to 4, in which Cu in the Cu-Sn alloy layer is partially substituted with an element in the underlayer.

(Aspect 6)

The copper or copper alloy sheet strip with the surface coating layer according to any one of Aspects 1 to 5, having a surface subjected to a reflow process.

(Aspect 7)

A mating connection terminal including the copper or copper alloy sheet strip with the surface coating layer according to any one of Aspects 1 to 6.

(Aspect 8)

A mating connector including the mating connection terminal according to Aspect 7.
The present application claims the benefit of a domestic priority to Japanese Patent Application No. 2018-195558 filed on October 17, 2018, the entire contents of which are incorporated herein by reference.

Description of Reference Numerals

| | |
|---|---|
| 1 | Ni layer |
| 2 | Cu-Sn alloy layer |
| 3 | Sn layer |
| 4 | Copper or copper alloy base metal |
| 5, 10 | Male specimen |
| 6, 11 | Stand |
| 7, 12 | Female specimen |
| 8, 13 | Weight |
| 9 | Stepping motor |
| 14 | Load cell |

**Claims**

1. A copper or copper alloy sheet strip with a surface coating layer, comprising: a copper or copper alloy sheet strip as a base metal; and an underlayer and a Cu-Sn alloy layer provided as the surface coating layer on a surface of the base metal in this order, the underlayer including any one or two layers of a Ni layer, a Co layer, and a Fe layer, wherein a surface of the Cu-Sn alloy layer has an arithmetic mean roughness Ra of 0.3 to 3.4 $\mu$m and a maximum height Rz of 2.2 to 14.4 $\mu$m.

2. The copper or copper alloy sheet strip with the surface coating layer according to claim 1, wherein a Sn layer is provided on the surface of the Cu-Sn alloy layer, and a surface coverage ratio of the Sn layer is 10% or less.

3. The copper or copper alloy sheet strip with the surface coating layer according to claim 1, wherein the underlayer has an average thickness of 0.1 to 3.0 $\mu$m, and the Cu-Sn alloy layer is composed of an $\eta$ phase or both an $\eta$ phase and an $\varepsilon$ phase, and has an average thickness of 0.2 to 1.0 $\mu$m.

4. The copper or copper alloy sheet strip with the surface coating layer according to claim 2, wherein the underlayer has an average thickness of 0.1 to 3.0 $\mu$m, and the Cu-Sn alloy layer is composed of an $\eta$ phase or both of an $\eta$ phase and an $\varepsilon$ phase, and has an average thickness of 0.2 to 1.0 $\mu$m.

5. The copper or copper alloy sheet strip with the surface coating layer according to any one of claims 1 to 4, further comprising a Cu layer between the underlayer and the Cu-Sn alloy layer.

6. The copper or copper alloy sheet strip with the surface coating layer according to any one of claims 1 to 4, wherein Cu in the Cu-Sn alloy layer is partially substituted with an element in the underlayer.

7. The copper or copper alloy sheet strip with the surface coating layer according to claim 5, wherein Cu in the Cu-Sn alloy layer is partially substituted with an element in the underlayer.

8. The copper or copper alloy sheet strip with the surface coating layer according to any one of claims 1 to 4, having a surface subjected to a reflow process.

9. The copper or copper alloy sheet strip with the surface coating layer according to claim 5, having a surface subjected to a reflow process.

10. The copper or copper alloy sheet strip with the surface coating layer according to claim 6, having a surface subjected to a reflow process.

11. The copper or copper alloy sheet strip with the surface coating layer according to claim 7, having a surface subjected to a reflow process.

12. A mating connection terminal comprising the copper or copper alloy sheet strip with the surface coating layer according to claim 1.

13. A mating connector comprising the mating connection terminal according to claim 12.

FIG. 1

FIG. 2

FIG. 3

FIG. 4

## INTERNATIONAL SEARCH REPORT

| International application No. |
| --- |
| PCT/JP2019/040694 |

**A. CLASSIFICATION OF SUBJECT MATTER**
Int. Cl. C25D5/12(2006.01)i, C25D5/50(2006.01)i, C25D7/00(2006.01)i,
H01R13/03(2006.01)i

According to International Patent Classification (IPC) or to both national classification and IPC

**B. FIELDS SEARCHED**

Minimum documentation searched (classification system followed by classification symbols)
Int. Cl. C25D5/12, C25D5/50, C25D7/00, H01R13/03

Documentation searched other than minimum documentation to the extent that such documents are included in the fields searched
Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | EP 2369688 A1 (KOBE STEEL) 28 September 2011, paragraphs [0009], [0017], [0025], [0026], [0047], tables 1-3, claims & CN 102201626 A & JP 2011-202266 A & JP 2011-204617 A & US 2011/0236712 A1 & US 2014/0041219 A1 | 1, 12, 13<br>2-11 |
| Y | JP 2017-82307 A (KOBE STEEL, LTD.) 18 May 2017, claims, paragraphs [0012], [0013], [0026] (Family: none) | 2-11 |
| A | JP 2017-48422 A (DOWA METALTECH KK) 09 March 2017, entire text & CN 107923058 A & KR 10-2018-0042418 A & TW 201718949 A & US 2018/0245230 A1 & WO 2017/038048 A1 | 1-13 |

☐ Further documents are listed in the continuation of Box C.    ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>15.11.2019 | Date of mailing of the international search report<br>26.11.2019 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**EP 3 868 922 A1**

**REFERENCES CITED IN THE DESCRIPTION**

**Patent documents cited in the description**

- JP 2006183068 A
- JP 2017082307 A
- JP 2017043827 A
- JP 2016211031 A
- JP 2015180770 A
- JP 2014208904 A
- JP 2018195558 A